# EUROPÄISCHE PATENTSCHRIFT

(11) **EP 2 552 290 B1**
(45) Veröffentlichungstag und Bekanntmachung des Hinweises auf die Patenterteilung: **04.11.2015**
(21) Anmeldenummer: 11711599.8
(22) Anmeldetag: 01.04.2011
(51) Int. Cl.: A47J 31/44, A47J 31/36

(54) **BRÜHKOPF EINER HEIßGETRÄNKEZUBEREITUNGSEINRICHTUNG**
BREWING HEAD OF A HOT-BEVERAGE PREPARATION DEVICE
TÊTE D'INFUSION POUR DISPOSITIF DE PRÉPARATION DE BOISSONS CHAUDES

(30) Priorität: 01.04.2010 DE 102010003637
(43) Veröffentlichungstag der Anmeldung: 06.02.2013
(73) Patentinhaber: BSH Hausgeräte GmbH, 81739 München (DE)
(72) Erfinder: HÖGLAUER, Michael, 83246 Unterwössen (DE); STEFFL, Michael, 83250 Marquartstein (DE); SEDOVSEK, Aleksander, 3330 Mozirje (SI)
(86) Internationale Anmeldenummer: PCT/EP2011/055130
(87) Internationale Veröffentlichungsnummer: WO 2011/121125

(56) Entgegenhaltungen:
- WO-A1-2004/028318
- WO-A1-2005/063092
- WO-A2-2007/031378

## Beschreibung

Die Erfindung betrifft einen Brühkopf einer Heißgetränkezubereitungseinrichtung für Haushaltszwecke, beispielsweise einer Kaffeemaschine, die mit topfförmigen Substratkapseln bestückt werden kann. Der Brühkopf umfasst eine Brühkammer zur Aufnahme der Substratkapseln. Er besteht aus einem feststehenden Brühkammerteil und einem bewegbaren Brühkammerteil, mit dem die Brühkammer zum Beispiel durch rotatorisches Verschwenken oder translatorisches Verfahren geöffnet werden kann, um die Substratkapseln darin zu platzieren. Die Brühkammer umfasst eine Verriegelungseinrichtung zum Verriegeln der Brühkammer. Sie enthält eine Dichtung zur druckdichten Abdichtung einer der beiden Brühkammerteile mit der Substratkapsel während der Getränkezubereitung. Die Erfindung betrifft außerdem eine Heißgetränkemaschine für Haushaltszwecke mit einem derartigen Brühkopf.

Die 20 2008 014 160 U1 beschreibt einen kompakten Brühkopf für eine Getränkezubereitungsmaschine. Er umfasst einen schwenkbaren Deckel, der zur Getränkezubereitung nach Einsetzen einer Substratkapsel in eine Aufnahme auf eine feststehende Basis herabgeschwenkt werden kann. Sowohl zum Schließen als auch zum Öffnen wird er mit einem Griff bedient, der durch Verrasten eine offene und eine geschlossene Position für einen Benutzer spürbar macht.

Die WO 2005 / 063 092 A1 offenbart eine Brühkopfeinheit einer Kaffeemaschine, die ein einfaches Einsetzen oder Entfernen eines Kaffeefilters und eine einfache Befestigung des Filters und eines Filterhalters am Brühkopf der Kaffeemaschine vorsieht, um eine wasser- und druckdichte Verbindung herzustellen.

Die WO 2007 / 031 378 A2 offenbart eine Espressomaschine mit einem Filterhalter, der eine vorverpackte Menge an Kaffeepulver aufnehmen kann, und mit einer Zufuhreinrichtung für heißes Wasser. Zum Beladen des Filterhalters wird jener von der Zufuhreinrichtung weg verschwenkt.

Der WO2004 / 028 31 A1 offenbart eine Zubereitungseinrichtung mit einem Halter zur Aufnahme eines extrahierbaren Produkts. Das Produkt wird über eine Beschicköffnung eingesetzt, die sich mit einem Deckel verschließen lässt. Der Deckel umfasst eine Schließeinrichtung, die eine erste und eine zweite definierte Position einnehmen kann, sowie über eine Spanneinrichtung, die den Halter und den Deckel gegeneinander verspannen. Die Schließeinrichtung und die Spanneinrichtung sind mechanisch miteinander gekoppelt, so dass die erste und zweite definierte Position mit einem Aktivieren bzw. Deaktivieren der Spanneinrichtung korreliert.

Aufgabe der Erfindung ist es, den Betreib der Heißgetränkezubereitungseinrichtung sicherer zu gestalten, um Beeinträchtigungen des Benutzers insbesondere bei einer Fehlbedienung auszuschließen.

Die Aufgabe der Erfindung wird bei dem eingangs genannten Brühkopf dadurch gelöst, dass er drei Betriebspositionen der Brühkammer ermöglicht:
- eine Öffnungsposition dient der Entnahme einer benutzten Substratkapsel und dem Beladen der Brühkammer mit einer unverbrauchten Substratkapsel. Die Brühkammerteile sind in der Öffnungsposition auseinander gefahren und das verschwenkbare Brühkammerteil aufgeschwenkt;
- in einer teilgeöffneten oder teilgeschlossenen Position ist die Brühkammer verschlossen, ihr Beladen ist also unmöglich, die Dichtung ist aber noch entspannt;
- in einer geschlossenen bzw. verriegelten Position ist die Brühkammer ebenfalls geschlossen, die Dichtung aber gespannt. In dieser Position kann die Getränkezubereitung erfolgen, weil die Substratkapsel in der Brühkammer druckdicht verschlossen ist

Erfindungsgemäß umfasst der Brühkopf außerdem zumindest in einem der beiden Brühkammerteile einen Brühkammertopf, der zwischen einer Öffnungsstellung mit einer entspannten Dichtung und einer Schließstellung mit einer gespannten Dichtung verfahrbar ist und eine Vorverriegelungseinrichtung (140, 230) als Bestandteil der Verriegelung, die die beiden Brühkammerteile (10; 20) in der teilgeschlossenen Position miteinander verriegelt.

Nach Einlegen der Substratkapsel in die Brühkammer stützt sie sich beim Schließen der Brühkammer gegen eines der beiden Brühkammerteile ab und wird auf das andere Brühkammerteil gepresst. Die Dichtung ist derart in dem einen der beiden Brühkammerteile platziert, dass sie die Substratkapsel gegenüber diesem Brühkammerteil abdichtet. Im Folgenden ist jedoch der Einfachheit halber von der Abdichtung, dem Verschluss und dem Entspannen "der Brühkammer" die Rede, auch wenn darunter die Abdichtung etc. der Substratkapsel gegenüber einem der beiden Brühkammerteile zu verstehen ist.

Die Erfindung wendet sich also davon, den Öffnungs- bzw. Schließvorgang quasi in einem Zug und übergangslos zwischen einer Öffnungsstellung und einer Schließstellung zu ermöglichen. Sie verfolgt vielmehr das Prinzip, den Schließ- bzw. Öffnungsvorgang in mehrere definierte und voneinander abgegrenzte Teilschritte zu unterteilen. Dadurch kann sie eine höhere Sicherheit beim druckdichten Verschließen der Brühkammer einerseits und beim Entspannen der Brühkammer nach einem Zubereitungsvorgang andererseits gewährleisten. Denn die Unterteilung in Teilschritte ermöglicht es, die zuverlässige und sichere Einnahme jeder Teilposition zu überwachen. Bei Störungen kann gegebenenfalls ein Signal abgegeben oder die Einnahme der nächsten Position blockiert werden, um auf eine Fehlfunktion hinzuweisen. Damit kann einerseits der zuverlässige dichte Verschluss der Brühkammer in Vorbereitung auf einen Zubereitungsprozess sichergestellt werden und andererseits ein unkontrolliertes Entspannen der Brühkammer nach einem Zubereitungsprozess samt einer Beeinträchtigung des Benutzers durch unkontrollierte Druckentlastung zuverlässig ausgeschlossen werden. Die Bedienung der Heißgetränkezubereitungseinrichtung wird damit erheblich sicherer.

Das Schließen der Brühkammer und ihr Öffnen werden erfindungsgemäß also jeweils in Teilschritte unterteilt. Erfindungsgemäß weist der Brühkopf eine Vorverriegelungseinrichtung als Bestandteil der Verriegelung auf, die die beiden Brühkammerteile in der teilgeschlossenen bzw. teilgeöffneten Position miteinander verriegelt. In dieser Position ist die Dichtung noch nicht angespannt oder bereits entspannt. Im Öffnungsvorgang wird demzufolge beim Wechsel von der geschlossenen in die teilgeschlossene Position zunächst nur die Dichtung gezielt und kontrolliert entspannt, während die Vorverriegelung noch aktiviert ist. Bevor die Vorverriegelung gelöst und damit die Brühkammer vollständig geöffnet werden kann, kann sich der Bedienungsdruck aus dem vorangegangenen Zubereitungsvorgang aus der Brühkammer gezielt entspannen und langsam entweichen. Die Vorverriegelung stellt somit sicher, dass der Betriebsdruck aus der Getränkezubereitung die Brühkammer beim Öffnen nicht ungewollt aufsprengen und den Benutzer beeinträchtigen kann.

Eine Vorverriegelung kann beispielsweise elektrisch durch Stellmotoren, elektromechanisch durch Magnetschalter oder mechanisch durch entsprechende Verschlussmechanismen bewerkstelligt werden. Da bei einer auch im übrigen mechanischen Bedienung der Heißgetränkemaschine eine mechanische Vorverriegelung zuverlässiger sein dürfte, umfasst die Vörverriegelungseinrichtung nach einer weiteren vorteilhaften Ausgestaltung der Erfindung zumindest einen Haken, der an einem der Brühkammerteile angebracht und am anderen Brühkammerteil einhakbar ist. Ein oder mehrere Haken als Vorverriegelungseinrichtung lassen sich über Hebelkonstruktionen einfach bedienen und bilden eine einfach herstellbare Mechanik, deren zuverlässige Funktion sowohl mechanisch als auch elektronisch zum Beispiel durch Schalter oder Sensoren gut überwacht werden kann.

Nach einer weiteren vorteilhaften Ausgestaltung der Erfindung ist der bzw. sind die Haken der Vorverriegelungseinrichtung durch eine Feder vorgespannt. Damit nehmen die Haken aufgrund ihrer Federvorspannung und nicht etwa allein aufgrund einer Betätigung des Benutzers und damit zuverlässig eine definierte Stellung ein. Ein separater Betätigungsschritt für die Haken kann damit entfallen. Der bzw. die Haken sind vorzugsweise in seiner bzw. ihrer Verhakungsrichtung vorgespannt. Die Verhakung erfolgt damit selbsttätig - was eine Überprüfung ihres Erfolgs nicht erübrigt. Ein Entriegeln muss folglich aber vorsätzlich und gegen die Kraft der Feder vorgenommen werden und kann damit kaum versehentlich erfolgen. Die Feder vorgespannte Vorverriegelungseinrichtung trägt damit ebenfalls zur Bedienungssicherheit der Heißgetränkezubereitungseinrichtung bei.

Es ist dennoch nicht ausgeschlossen, dass zum Beispiel durch Manipulation oder Beschädigung der Zubereitungseinrichtung die Vorverriegelungseinrichtung die Brühkammer nicht zuverlässig verschließt. Da das sichere Vorverriegeln eine Voraussetzung für ein gezieltes und kontrolliertes Entspannen der Brühkammer beim Öffnen darstellt, wäre dadurch die Bedienungssicherheit der Zubereitungseinrichtung beeinträchtigt. Nach einer weiteren vorteilhafteren Ausgestaltung der Erfindung weist der Brühkopf daher eine Sperre auf, die das Verbringen der Brühkammer in die geschlossene Position blockiert, solange die Vorverriegelungseinrichtung entriegelt bzw. nicht korrekt und vollständig verriegelt ist. Der Brühkopf kann dazu selbsttätig die Stellung der Vorverriegelungseinrichtung detektieren und das Auslösen eines Getränkezubereitungsvorgangs verhindern, solange die Vorverriegelungseinrichtung nicht zuverlässig aktiviert ist. Eine derartige Sperre kann elektronisch ausgebildet sein, indem zum Beispiel Sensoren oder Kontakte das zuverlässige Verriegeln der Vorverriegelungseinrichtung überwachen. Die Sperre kann auch mechanisch ausgeführt sein, indem die Vorverriegelungseinrichtung selbst die weitere Bedienung der Getränkezubereitungseinrichtung mechanisch blockiert, so lange sie sich nicht in der verriegelten Position befindet. Die weitere Betätigung beispielsweise eines Bedienhebels der Zubereitungseinrichtung kann blockiert werden, solange der oder die Haken der Vorverriegelungseinrichtung nicht eingerastet sind. Damit wird die zuverlässige Aktivierung der Vorverriegelungseinrichtung zum Schutz des Benutzers sichergestellt.

Da die Dichtung in der teilgeschlossenen Position noch bzw. schon entspannt und in der geschlossenen Position gespannt ist, wird sie zwischen der teilgeschlossenen und der geschlossenen Position separat aktiviert bzw. deaktiviert. Sie kann durch einen geringen Hub gespannt werden, der Bestandteil der Schließbewegung der Brühkammer sein kann. Wie oben bereits erläutert umfasst der Brühkopf erfindungsgemäß zumindest in einem der beiden Brühkammerteile einen Brühkammertopf, der zwischen einer Öffnungsstellung mit einer entspannten Dichtung und einer Schließstellung mit einer gespannten Dichtung verfahrbar ist. Damit ist das Abdichten der Brühkammer bzw. das Abdichten eines der beiden Brühkammerteile gegenüber der Substratkapsel unabhängig von der Bewegung der Brühkammerteile möglich. Dadurch sind auch das Entspannen der Dichtung und damit die Druckentlastung der Brühkammer nach einem Getränkezubereitungsvorgang separat steuerbar. Der Brühkammertopf sorgt damit für die betriebsnotwendige Abdichtung und ermöglicht die betriebssichere Entspannung der Brühkammer. In der geschlossenen Position verriegelt ihn die Verriegelungseinrichtung bei gespannter Dichtung.

Es gibt Substratkapseln unterschiedlichen Volumens, die sich durch ihre Höhe bezogen auf ihre Symmetrieachse unterscheiden. Die Heißgetränkezubereitungsvorrichtungen sollen mit den Kapseln unterschiedlicher Höhe bestückt werden können. Nach einer weiteren vorteilhaften Ausgestaltung der Erfindung kann in einem der Brühkammerteile ein Brühkammerschlitten angeordnet sein, der in mindestens zwei Schließ- bzw. Arretierstellungen innerhalb des Brühkammerteils festgelegt werden kann. Die Schließ- bzw. Arretierstellungen ergeben sich durch Verschiebung des Brühkammerschlittens entlang einer Hochachse der Brühkammer. Der Brühkammerschlitten kann zumindest in eine untere Stellung, die der Verarbeitung einer kleinen Kapsel zugeordnet ist, mit einer Feder vorgespannt sein. Die Federhärte kann so bemessen sein, dass sich der Brühkammerschlitten von einer größeren bzw. großen Kapsel gegen die Kraft der Feder verschieben lässt. In einer oberen Stellung, die der Verarbeitung einer großen Kapsel entspricht, kann der Brühkammerschlitten an einer Gehäusewandung der Brühkammer anliegen, sodass sich eine Arretierung in dieser Stellung erübrigt kann. Per Betätigungshebel lässt sich der Brühkammerschlitten in der einen Position oder ggf. allen Positionen arretieren. Bei nur zwei unterschiedlichen Positionen des Brühkammerschlittens für eine kleine und eine große Substratkapsel kann damit ein separater Bedienungsschritt entfallen, in dem der Benutzer den Brühkopf auf die verwendete Kapsel einstellen müsste.

Die Bedienung der Zubereitungseinrichtung soll möglichst einfach gestaltet und für den Benutzer weitgehend nachvollziehbar sein. Am Brühkopf ist dazu ein irgendwie geartetes Betätigungselement zum Öffnen und Schließen der Brühkammer angebracht. Dafür genügt eine geeignete Fläche oder ein feststehender Griff, der an dem bewegbaren Brühkammerteil angebracht ist und mit dem es auf das feststehende Brühkammerteil hin bewegt werden kann. Zur Aktivierung der Verriegelungseinrichtung kann ein Hebel angebracht sein. Nach einer weiteren vorteilhaften Ausgestaltung umfasst der Brühkopf einen Betätigungshebel, mit dem neben dem Öffnen, Schließen und Verriegeln der Brühkammer zusätzlich auch die Vorverriegelungseinrichtung betätigbar ist. Er ist dazu beweglich an dem Brühkammerteil angebracht, so dass er zwischen mindestens zwei Positionen verstellbar ist. In einer ersten Position kann er der Bedienung des bewegbaren Brühkammerteils dienen, mit der Einnahme der zweiten Position kann die Vorverriegelungseinrichtung betätigbar sein. Er erleichtert die Bedienung der Zubereitungseinrichtung, weil nicht nur zum Öffnen und zum Schließen, sondern auch zum Wechseln zwischen der teilgeschlossenen und der geschlossenen bzw. der offenen Position lediglich derselbe Hebel zu bedienen ist. Eine einfache Bedienung stellt auch einen Sicherheitsaspekt dar, weil der Benutzer nicht durch eine Mehrzahl von Betätigungseinrichtungen verwirrt und deren Bedienung in der korrekten Reihenfolge berücksichtigen muss. Ein einziger Betätigungshebel fördert damit sowohl den Komfort als auch die Bedienungssicherheit der Zubereitungseinrichtung.

Nach einer weiteren vorteilhaften Ausgestaltung der Erfindung ist durch den Betätigungshebel zusätzlich der Brühkammerschlitten arretierbar. Dadurch lässt sich ein separater Betätigungshebel für die Arretierung des Brühkammerschlittens einsparen. Obwohl sie für Substratkapseln unterschiedlicher Größe verwendbar ist, verkompliziert sich dadurch die Bedienung der Zubereitungseinrichtung nicht, weil trotz der Zusatzfunktion keine zusätzliche Bedienungseinrichtung erforderlich ist. Die Arretierung stellt einen zusätzlichen Sicherheitsaspekt dar. Die zusätzliche bzw. integrierte Bedienung des Brühkammerschlitten durch den Betätigungshebel lässt dessen Arretieren vom Benutzer unbemerkt erfolgen, was bei einem aufmerksamen Benutzer zwar Verwunderung hervorrufen dürfte, jedenfalls aber die Bedienung der Zubereitungseinrichtung nicht erschwert. Dazu kann ein verschiebbarer Arretierschlitten den Brühkammerschlitten mit der Brühkammer verriegeln, indem er selbst in einer Richtung senkrecht zur Verschieberichtung des Brühkammerschlittens verschiebbar ist und in dessen Arretierstellung(en) in den Brühkammerschlitten eingreift. Er kann auf ein Sensorsignal elektrisch verschoben oder über eine Hebelmechanik vom Bedienhebel aus angetrieben werden.

Damit die Zubereitungseinrichtung durch einen einzigen Betätigungshebel von ihrer Öffnungs- in die Schließposition und umgekehrt verbracht werden kann, müssen die einzelnen dabei ablaufenden Bedienvorgänge, zum Beispiel das Vorverriegeln oder das Aktivieren der Dichtung, in der korrekten Reihenfolge erfolgen und überwacht werden. Dies kann grundsätzlich elektronisch geschehen, indem in Abhängigkeit von der Stellung des Betätigungshebels zum Beispiel die Vorverriegelungseinrichtung oder der Brühkammertopf elektromotorisch in die erforderliche Stellung verbracht und ihre korrekte Position durch Sensoren oder Schalter überprüft werden. Nach einer weiteren vorteilhaften Ausgestaltung der Erfindung sind jedoch der Betätigungshebel, die Vorverriegelungseinrichtung und der Brühkammertopf derart mechanisch gekoppelt, dass der Brühkammertopf erst nach Betätigung der Vorverriegelungseinrichtung verfahrbar und/oder arretierbar ist. Denn eine mechanische Kopplung, die die korrekte Reihenfolge der Bedienvorgänge sicherstellt, also die Aktivierung der Vorverriegelung vor der Verriegelung des Brühkammertopfs beim Schließen und sinngemäß umgekehrt beim Öffnen, erfordert einen geringeren Platzaufwand als separate, zum Beispiel elektrisch betriebene Stellmotoren und zugehörige Schalter oder Sensoren. Außerdem lassen sich mit einer mechanischen Kopplung die Reihenfolge der Bedienvorgänge und deren zuverlässige Ausführung nicht nur in der Schließrichtung, sondern ohne großen zusätzlichen konstruktiven Aufwand auch in der Gegenrichtung herstellen.

Nach einer weiteren vorteilhaften Ausgestaltung der Erfindung umfasst der Brühkopf ein Blockadeelement, das die Bewegung des Betätigungshebels solange blockiert, bis das bewegbare Brühkammerteil auf dem feststehenden Brühkammerteil aufliegt. Die Blockadeeinrichtung stellt eine erforderliche Reihenfolge von Bedienvorgängen sicher, wonach zuerst das bewegbare Brühkammerteil auf das feststehende geklappt wird, bevor der Brühkammertopf verfahren und arretiert werden kann. Anderenfalls könnte beispielsweise die Vorverriegelungseinrichtung versehentlich schon aktiviert sein, obwohl die Brühkammer noch nicht geschlossen ist. Das Blockadeelement dagegen stellt sicher, dass das bewegbare Brühkammerteil auf dem feststehenden aufliegt, bevor die Vorverriegelung aktiviert und der Brühkammerschlitten arretiert wird. In einer einfachen mechanischen Ausführungsform kann das Blockadeelement einen Taster umfassen, der bei einer Berührung des bewegbaren Brühkammerteils mit dem festen betätigt wird. Er kann mechanisch mit einer Sperrklinke verbunden sein, die einen Hub- oder Schwenkweg des Betätigungshebels erst freigibt, wenn der Taster betätigt ist.

Die eingangs genannte Aufgabe wird außerdem durch eine Heißgetränkezubereitungsmaschine gelöst, die über einen Brühkopf nach einem der obigen Ansprüche verfügt.

Die Heißgetränkezubereitungsmaschine kann durch ein Betätigungsverfahren zum Verschließen einer Brühkammer beim Aktivieren der Heißgetränkemaschine mit einer manuell bedienbaren Brühkammer zur Verarbeitung von Substratkapseln betrieben werden, wobei die Heißgetränkemaschine eine verschließbare Brühkammer mit einer Verriegelung und einer Vorverriegelung dafür umfasst. Das Betätigungsverfahren umfasst die folgenden Schritte:
a) Einlegen einer frischen Substratkapsel,
b) Verschließen der Brühkammer,
c) Aktivieren der Vorverriegelung der Brühkammer,
d) Aktivieren der Verriegelung der Brühkammer.

Durch die Unterteilung des Verschließvorgangs der Brühkammer kann eine deutlich höhere Bedienungssicherheit erzielt werden, weil die Verfahren getrennt voneinander und in der vorgegebenen zwingenden Reihenfolge ablaufen können. Zudem kann nach jedem Bedienschritt ein Überprüfungsschritt eingeschoben bzw. vorgenommen werden, der den Erfolg des vorangegangenen Schritts überprüft. So kann insbesondere nach der Aktivierung der Vorverriegelung überprüft werden, ob sie korrekt und erfolgreich erfolgte. Sollte die Aktivierung oder ein anderer Bedienungsschritt nicht oder nicht vollständig erfolgt sein, kann das weitere Verfahren gestoppt, der nächste Bedienungsschritt blockiert und/oder ein entsprechendes Signal ausgegeben werden. Das Verfahren gewährleistet also, dass die Zubereitungsmaschine zuverlässig nur in der vorgesehenen Weise und damit mit einer maximalen Betriebssicherheit betrieben werden kann.

Die Heißgetränkezubereitungsmaschine kann durch ein Betätigungsverfahren zum Öffnen der Brühkammer der Heißgetränkemaschine mit einer manuell bedienbaren Brühkammer zur Verarbeitung von Substratkapseln betrieben werden, die eine Verriegelung und eine Vorverriegelung der Brühkammer umfasst. Das Verfahren umfasst folgende Schritte:
a) Lösen der Verriegelung zum Entspannen der geschlossenen Brühkammer von Zubereitungsdruck,
b) Lösen der Vorverriegelung zur Freigabe der teilgeschlossenen Brühkammer und
c) Öffnen der Brühkammer zum Entfernen der benutzten und gegebenenfalls zum Einlegen einer frischen Substratkapsel.

Gerade das Unterteilen des Öffnungsvorgangs und Zwischenschalten wenigstens eines separat erfolgenden Verfahrensschritts dient der Betriebssicherheit der Zubereitungseinrichtung und der Sicherheit des Benutzers. Das Verfahren stellt insbesondere sicher, dass die Brühkammer, die nach einem Getränkezubereitungsvorgang geöffnet werden soll, zuerst vom Zubereitungsdruck entspannt wird. Sie ist aber erfindungsgemäß bei der Druckentspannung noch vorverriegelt bzw. teilgeschlossen, kann also vor allem nicht durch den Zubereitungsdruck aufgesprengt werden. Erst danach kann sie vollständig geöffnet werden, ohne dass der Zubereitungsdruck den Benutzer beeinträchtigen könnte.

Nach einer vorteilhaften Ausgestaltung des Verfahrens kann beim Öffnen der Brühkammer die Substratkapsel mechanisch durch das Gerät ausgeworfen werden. Dies geschieht vorzugsweise durch Auswurf in einen Reststoffbehälter, so dass die Brühkammer zum Einlegen einer frischen Substratkapsel sofort bereit ist, ohne dass ein Bedienungsschritt des Benutzers erforderlich wäre. Dadurch wird ein hoher Bedienungskomfort der Zubereitungsmaschine erreicht.

Das Prinzip der Erfindung wird im Folgenden anhand einer Zeichnung beispielshalber noch näher erläutert. In der Zeichnung zeigen:
- Figur 1:: eine Seiten- und eine Frontansicht eines geöffneten Brühkopfs einer ersten Ausführungsform,
- Figur 2:: zwei perspektivische Schrägansichten eines Brühkammeroberteils einer zweiten Ausführungsform,
- Figur 3:: eine Draufsicht auf den Brühkopf der ersten Ausführungsform und eine zugehörige Schnittansicht des Brühkammeroberteils entlang der Schnittlinie A - A,
- Figur 4:: eine Draufsicht auf den Brühkopf und eine weitere Schnittansicht des Brühkammeroberteils der ersten Ausführungsform entlang der Schnittlinie B-B,
- Figur 5:: zwei perspektivische Schrägansichten des Brühkopfs der zweiten Ausführungsform,
- Figur 6:: eine weitere perspektivische Schrägansicht des Brühkopfs der zweiten Ausführungsform
- Figur 7:: eine Seitenansicht und eine Schnittansicht entlang der Schnittlinie C - C gemäß der ersten Ausführungsform,
- Figur 8:: eine Seitenansicht und eine Schnittansicht entlang der Schnittlinie D - D gemäß der ersten Ausführungsform,
- Figur 9:: eine Schnittansicht durch den geschlossenen Brühkopf gemäß der zweiten Ausführungsform,
- Figur 10:: perspektivische Schrägansichten des geschlossenen Brühkopfs gemäß der zweiten Ausführungsform.

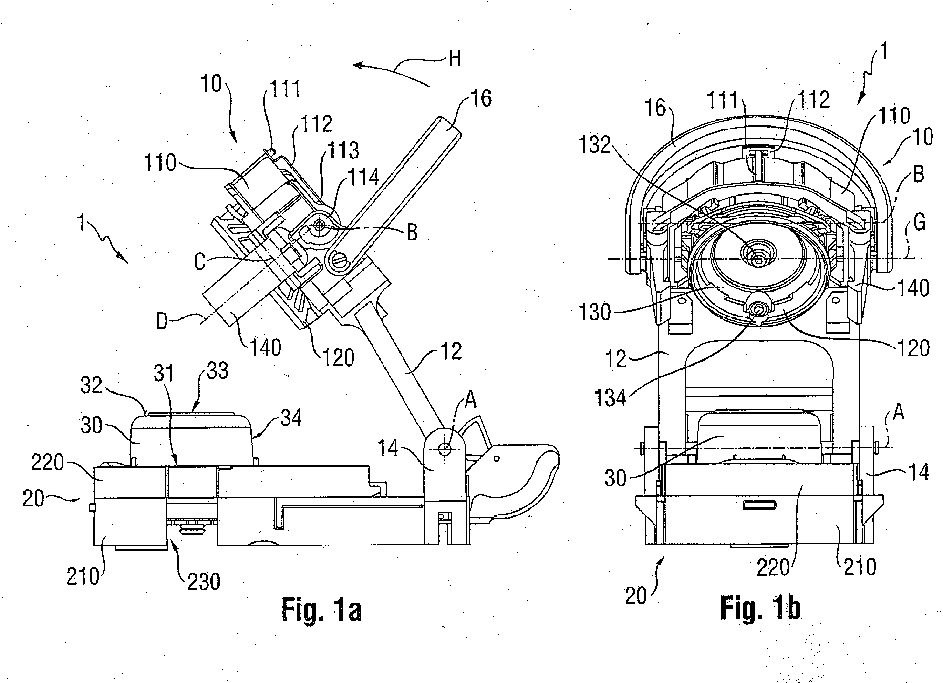

Eine Seitenansicht eines geöffneten Brühkopfs 1 zeigt Figur 1a, Figur 1b beine Frontalansicht. Er umfasst ein Brühkammeroberteil 10 und ein Brühkammerunterteil 20. Das Brühkammeroberteil 10 ist über einen Brühkopfarm 12 an einem Lagerblock 14 um eine Schwenkachse A schwenkbar mit dem Brühkammerunterteil 20 verbunden. Der Brühkopf 1 und mit ihm das schwenkbare Brühkammeroberteil 10 lassen sich mit Hilfe eines Bedienhebels 16 betätigen, zum Beispiel wenn das Brühkammeroberteil 10 auf das Brühkammerunterteil 20 hinabgeschwenkt wird. Die Brühkammerteile 10, 20 werden miteinander verriegelt, um eine Brühkammer zu bilden und eine Substratkapsel, hier eine große Substratkapsel 30, einzuschließen.

Das Brühkammerunterteil 20 besteht aus einem Rahmen 210, in dem beidseitig und einander gegenüberliegend zwei Hakennischen 230 ausgebildet sind. Auf dem Rahmen 210 liegt ein Auswerfer 220, auf dem die große Brühkapsel 30 mit einem sie verschließenden Laminat 31 auf ihrer Unterseite abgelegt ist.

Das Brühkammeroberteil 10 umfasst ein ringförmiges Gehäuse 110, an dem der Bedienhebel 16 in einer Schließrichtung H und um eine Achse G schwenkbar angebracht ist. Figur 1a zeigt ihn in einer Grundstellung, in der er leicht auf die Frontseite des Brühkopfs 1 hin und damit in einem Winkel von etwa 80° gegenüber der Oberseite des Gehäuses 110 auf einen Benutzer zu geneigt ist. Er greift über eine Verzahnung (nicht dargestellt) in eine Steuerplatte 114 ein, die ebenfalls am Gehäuse 110 und in der Gegenrichtung des Bedienhebels 16 um die Achse B schwenkbar angebracht ist. Das Gehäuse 110 umschließt einen zylindrischen Brühtopf 120, der innerhalb des Gehäuses 110 entlang einer Verschiebeachse D geringfügig verschiebbar ist. Die Amplitude der Verschiebung des Brühtopfs 120 entlang der Achse D gegenüber dem Gehäuse 110 ist auf einen geringen Hub von wenigen Millimetern beschränkt. Eine Federspange 112 ist auf der Oberseite des Gehäuses 110 an Stiften 111 und am Brühtopf 120 an Stiften 113 befestigt, die an dem Gehäuse 110 bzw. am Brühtopf 120 angeformt sind. Der Brühtopf 120 ist somit schwimmend gelagert, was u.a. einem Toleranzausgleich zwischen dem Brühtopf 120 und dem Gehäuse 110 dient.

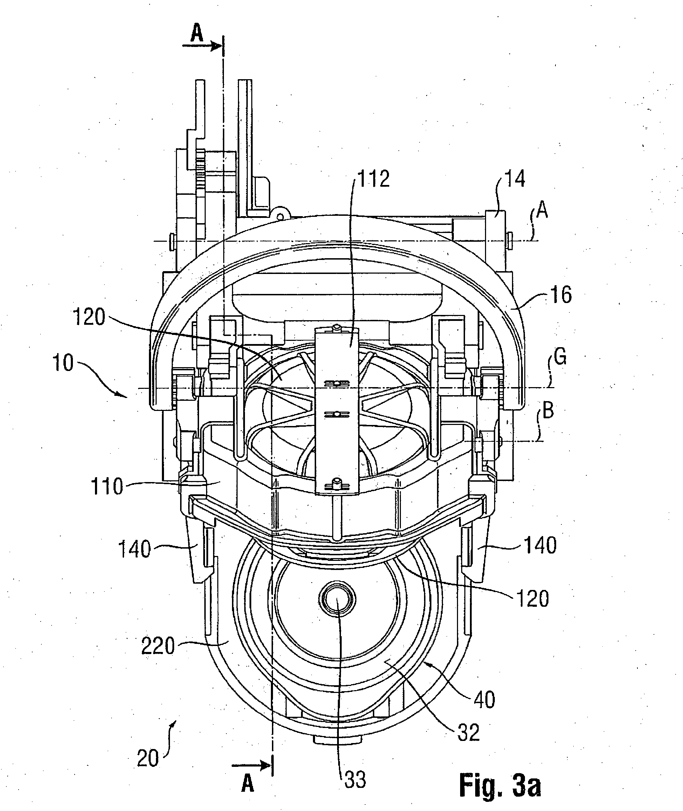

Innerhalb des Brühtopfs 120 ist ein im Wesentlichen scheibenförmiger Brühkammerschlitten 130 ebenfalls entlang der Achse D (vgl. Figur 1a) verschiebbar gelagert (siehe Figur 1 b). Er trägt einen mittleren Zentrierstift 132 und einen exzentrischen Positionierstift 134, die beide in eine Oberseite 32 der großen Substratkapsel 30 eingreifen. Der mittige Zentrierstift 132 taucht in ein zentrales Sackloch der Kapsel 30 (vgl. Figur 3a) ein und sorgt für eine zentrierte Lage der Substratkapsel 30 innerhalb des Brühkopfs 1 bzw. Brühtopfs 120. Der kleinere exzentrische Positionierstift 134 greift in eine entsprechende, in Figur 1a ebenfalls verdeckte Einkerbung 34 am Rand der Substratkapsel 30 ein. Ist die Kapsel 30 nicht korrekt eingelegt, kann der Brühkopf 1 daher nicht geschlossen werden.

Am Brühkammeroberteil 10 sind beidseitig und einander gegenüberliegend Haken 140 angebracht. Sie-sind um eine im geschlossenen Zustand des Brühkopfs 1 waagrecht verlaufende Achse C schwenkbar angebracht. Im geschlossenen Zustand des Brühkopfs 1 greifen sie in die Hakennischen 230 ein und stellen damit einen wesentlichen Bestandteil der Vorverriegelungseinrichtung des Brühkopfs 1 dar. Sie sind in ihrer Schließstellung, also nach innen geklappt, federvorgespannt und lassen sich durch den Bedienhebel 16 und die Steuerplatte 114 zum Öffnen des Brühkopfs 1 in unten detailliert beschriebener Weise auseinander schwenken.

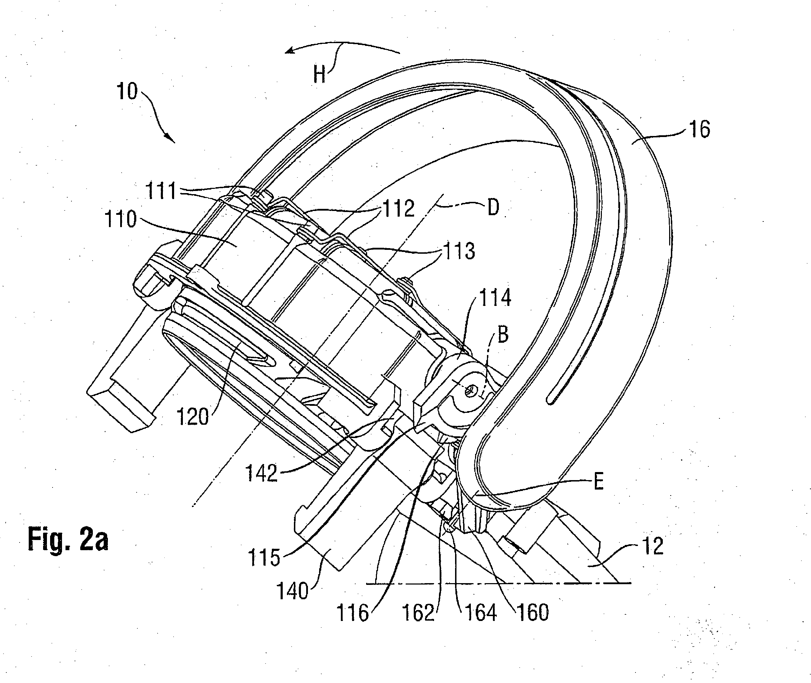

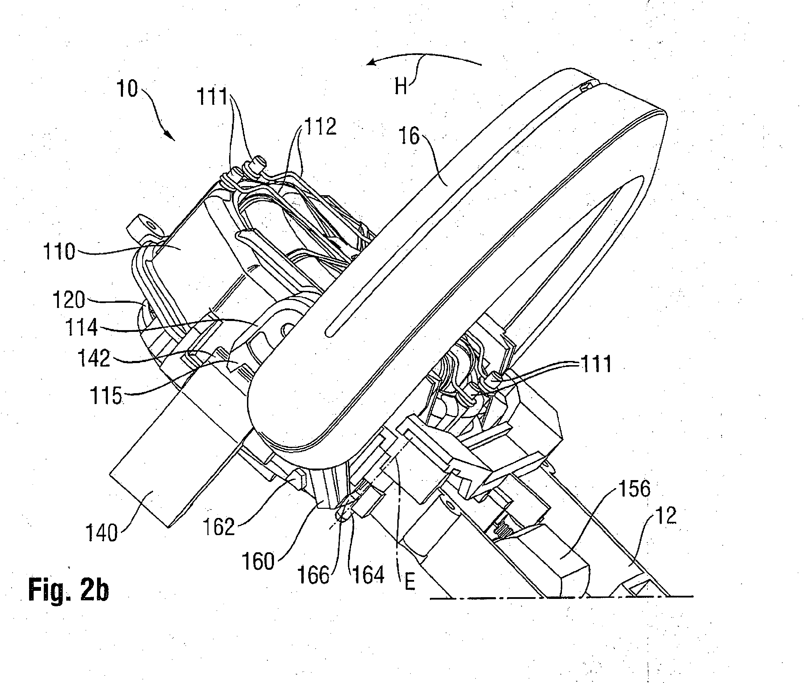

Dies ist im Detail in den Figuren 2a und 2b in perspektivischen Ansichten des Brühkammeroberteils 10 deutlicher dargestellt: das Brühkammeroberteil 10 weist ein geringfügig verändertes Design zum Beispiel hinsichtlich des Bedienhebels 16 auf. Sein Aufbau und seine Funktion sind jedoch unverändert. Abweichend gegenüber Figur 1 trägt das Gehäuse 110 gemäß Figuren 2a, 2b zwei Federspangen 112, die als gebogene Drähte ausgebildet sind, die zur Befestigung am Gehäuse 110 um Stifte 111 und zu Befestigung am Brühtöpf 120 um Stifte 113 gewickelt sind.

Der Bedienhebel 16 steht in den Figuren 2a und 2b senkrecht von der Oberseite des Gehäuses 110 ab. In diese Position bzw. in eine Neigung von maximal etwa 100° gegenüber der Oberseite des Gehäuses 110 entgegen der Schießrichtung H lässt er sich nur gegen die Kraft einer nicht dargestellten Feder bringen, die ihn in die Grundstellung gemäß Figur 1a drängt. Der Bedienhebel 16 greift über eine nicht dargestellte Verzahnung in die Steuerplatte 114 ein. Schwenkt der Bedienhebel 16 in Schließrichtung H nach vorne, d. h. in der Ansicht gemäß Figur 2a gegen den Uhrzeigersinn, so verdreht er die Steuerplatte 114 um die Schwenkachse B in Richtung des Uhrzeigersinns.

Von der Steuerplatte 114 stehen eine erste Nase 115 und eine zweite Nase 116 radial ab. Die Nase 115 liegt in der in Figur 2a dargestellten Öffnungsstellung des Brühkopfs 1, also einer Position des Bedienhebels 16 zwischen etwa 80° bis 100°, an einer Außenseite eines Ansatzes 142 an. Der Ansatz 142 verlängert den Haken 140 über seine Schwenkachse C (vgl. Figur 1 a) hinaus radial nach oben. Die erste Nase 115 drückt damit den Haken 140 an seinem Ansatz 142 entgegen seiner Federvorspannung nach außen. Die zweite Nase 116 ist an der Steuerplatte 114 gegenüber der ersten Nase 115 bezüglich der Achse B derart axial versetzt angebracht, dass sie in einer später dargestellten Schließstellung auf der gegenüberliegenden Rückseite des Ansatzes 142 anliegt und sich zwischen ihm und dem Gehäuse 110 befindet.

Wie oben bereits dargestellt, kann das verschwenkbare Brühkammeroberteil 10 am Bedienhebel 16 hinuntergeschwenkt und in eine nahezu waagrechte Lage auf das Brühkammerunterteil 20 abgelassen werden. Erst aber, wenn das Brühkammeroberteil 10 diese Lage erreicht hat, soll der Bedienungshebel 16 um die Achse G (vgl. Figur 1b) gegenüber dem Gehäuse 110 verschwenkt werden können. Dazu verfügt er über einen Zapfen 160, der fest mit ihm verbunden ist und radial von der Achse G absteht vgl. auch Figur 2b). Ein Anschlag 162 am Gehäuse 110 verhindert, dass der Bedienhebel 16 zu weit nach hinten entgegen der Schließrichtung H bzw. nicht weiter als etwa 100° bezüglich des Brühkammeroberteils 10 verschwenkt werden kann. Im Gehäuse 110 in der Nähe seines Anschlusses an dem Brühkopfarm 12 ist ein Federstift 164 entlang einer Achse E und federbelastet verschiebbar gelagert. Bei geöffnetem Brühkopf 1 ist er ausgefahren. Wird der Brühkopf 1 geschlossen, also das Brühkammeroberteil 10 auf das Brühkammerunterteil 20 abgesenkt, so wird der Federstift 164 entgegen der Federkraft ins Gehäuse 110 eingeschoben. Vom Federstift 164 steht ein Dreiecksriegel 166 radial ab und in einen Schwenkweg des Zapfens 160 hinein, den der Zapfen 160 bei einem Herabschwenken des Bedienhebels 16 zurücklegt. Solange der Federstift 164 ausgefahren ist, weil das Brühkammeroberteil 10 und das Brühkammerunterteil 20 nicht aufeinander liegen, blockiert also der Dreiecksriegel 166 eine Bewegung des Zapfens 160 und klemmt ihn zwischen sich und dem Anschlag 162 ein. Sobald aber der Federstift 164 ins Gehäuse 110 eingefahren ist, weil das Brühkammeroberteil 10 und das Brühkammerunterteil 20 aufeinander liegen, ist der Dreiecksriegel 166 aus dem Schwenkweg des Zapfens 160 herausgefahren, so dass er dessen Bewegung nicht mehr im Wege steht. Der Bedienhebel 16 kann daher erst dann in der Schließrichtung H nach vorne verschwenkt werden, wenn das Brühkammeroberteil 10 und das Brühkammerunterteil 20 aufeinander liegen.

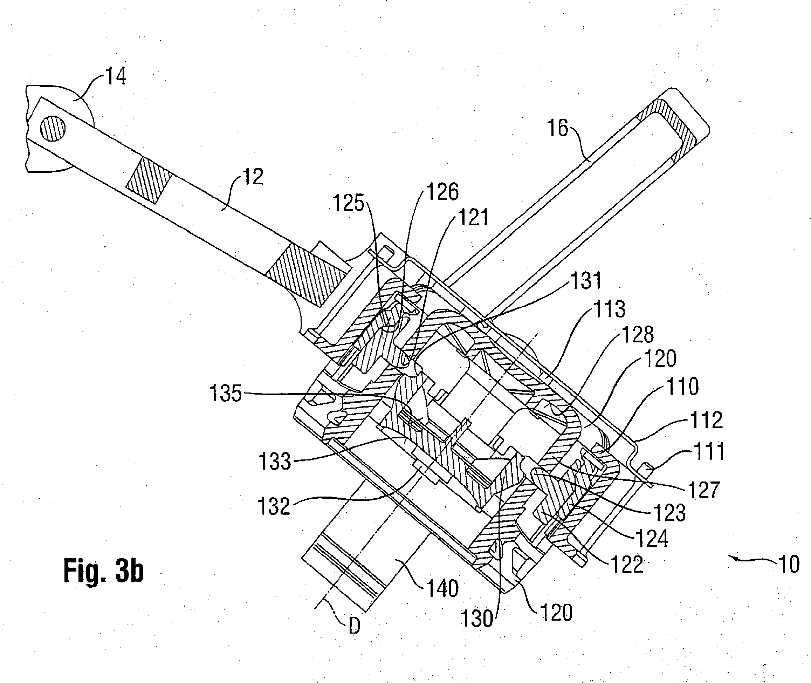

Die Figuren 3a, b dienen der Verdeutlichung des inneren Aufbaus des Brühkammeroberteils 10. Figur 3a bietet eine Draufsicht auf einen geöffneten Brühkopf 1, dessen Brühkammerunterteil 20 parallel zur Blattebene liegt und dessen Brühkammeroberteil 10 dem gegenüber um die Achse A verschwenkt dem Betrachter schräg entgegenragt. Auf dem Auswerfer 220 des Brühkammerunterteils 20 ist eine kleine Substratkapsel 40 abgelegt, die in dieser Perspektive von einer großen Substratkapsel 30 (vgl. Figur 1) nicht zu unterscheiden ist. Auch sie trägt auf ihrer Oberseite 32 ein zentrisch angeordnetes Sackloch 33, in das der Zentrierstift 132 (vgl. Figur 1b, 3b) beim Schließen des Brühkopfs 1 eingreift. In Figur 3a zeigt eine Schnittlinie A-A, die in der oberen Hälfte der Figur 3a verspringt. Der Versprung ist aber weitgehend unerheblich, weil sie zugehörige Schnittdarstellung in Figur 3b sich im Wesentlichen auch auf das Brühkammeroberteil 10 beschränkt, das davon unberührt bleibt.

Die Schnittlinie A-A verläuft nicht mittig durch das Brühkammeroberteil 10. Es ist das Gehäuse 110 zu erkennen, das den Brühtopf 120 ringförmig umgibt. Die am Brühtopf 120 ausgebildeten und nach oben abragenden Stifte 113 hängen den Brühtopf 120 in die Federspange 112 ein, die über die Stifte 111 am Gehäuse 110 befestigt ist.

Innerhalb des Brühtopfs 120 ist der Brühkammerschlitten 130 gelagert, der entlang der Achse D gegenüber dem Brühtopf 120 verschiebbar ist. Er hat in der Figur 3b eine abgesenkte Stellung eingenommen, wie sie für die Verarbeitung der kleinen Substratkapsel 40 (vgl. Figur 3a) erforderlich ist. Er liegt mit seiner Stirnfläche 133, die sowohl den Zentrierstift 132 als auch den in dieser Ansicht verdeckten Positionierstift 134 (vgl. Figur 1 b) trägt, auf der Oberseite 32 der kleinen Substratkapsel 40 auf, sobald das Brühkammeroberteil 10 auf das Brühkammerunterteil 20 abgesenkt ist. Er stützt mit seiner Stirnfläche 133 die Oberseite 32 der kleinen Substratkapsel 40 ab, wenn sie von ihrer Unterseite her durch (nicht dargestellte) Piercer am Auswerfer 220 angestochen wird.

Für die Verarbeitung einer großen Substratkapsel 30 muss der Brühkammerschlitten 130 in den Brühtopf 120 hinein, also in Richtung der Federspange 12 nach oben verschoben werden. Er stützt sich dann an einer Innenseite 128 des Brühtopfs 120 ab, was in einer späteren Figur noch separat dargestellt wird.

Der Brühkammerschlitten 130 wird in seine in Figur 3b dargestellte abgesenkte Position von einer nicht dargestellten Feder vorgespannt, die sich zwischen seiner Oberseite 135 und der Innenseite 128 des Brühtopfs 120 erstreckt.

Der Brühtopf 120 weist in seinem Mantel 127 radiale Durchbrüche 121 auf, durch die konvexe Arretiernasen 123 hindurchragen. Sie greifen in der abgesenkten Position des Brühkammerschlittens 130 an dessen konkaven Sperrflächen 131 ein. Der Brühkammerschlitten 130 ist dadurch gegenüber dem Brühkammertopf 120 in einer Verschiebungsrichtung zu dessen Innenfläche 128 hin blockiert. Die Arretiernasen 123 sind Bestandteil jeweils eines Arretierschlittens 122, der in radialer Richtung verschiebbar ist. Dadurch können die Nasen 123 aus ihrer in Figur 3b dargestellten Stellung eingefahren werden, um den Brühkammerschlitten 130 zu arretieren. In der dargestellten Arretierstellung hält sie ein Steuerring 124, der um den Brühtopf 120 herum verläuft und innerhalb des Gehäuses 110 entlang der Verschiebeachse D verschiebbar ist. Auf seiner Innenseite hat der Steuerring 124 eine umlaufende Schräge 125, die mit einer außenseitig an dem Arretierschlitten 122 ausgebildeten Anlauffläche 126 korrespondiert. Die Anlauffläche 126 ermöglicht es, dass der Steuerring 124 auf den Arretierschlitten 122 aufgeschoben werden kann und die Arretiernasen 123 entgegen der Federkraft nach innen auf den Brühtopf 120 hin verschoben werden.

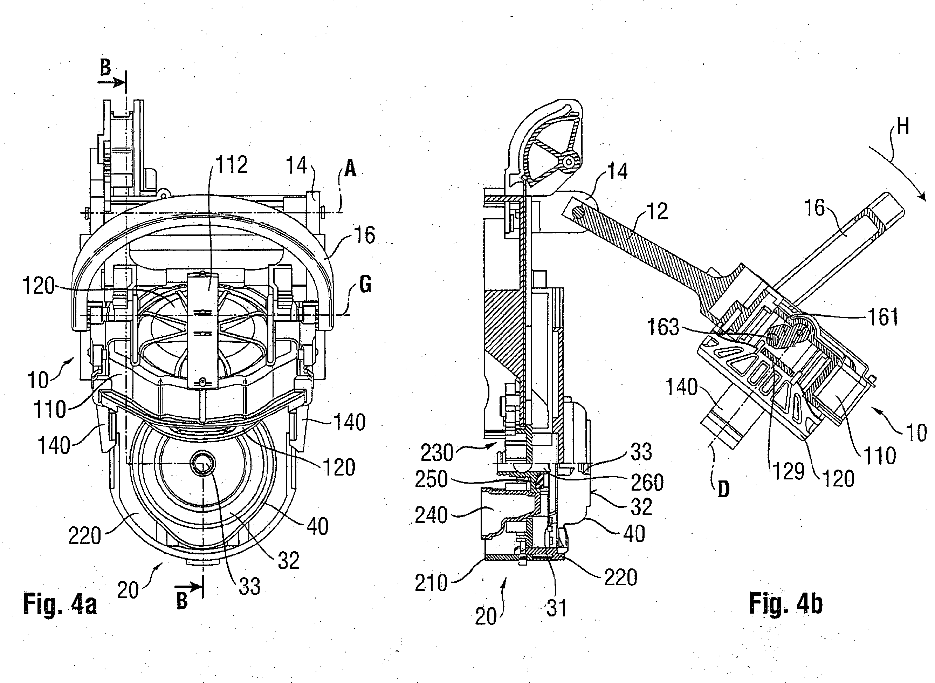

Die Figuren 4a, b zeigen eine ähnliche Darstellung wie die Figuren 3a, b. Figur 4a bietet weitgehend übereinstimmend mit Figur 3a eine Draufsicht auf einen geöffneten Brühkopf 1 von einer Oberseite aus. Sie zeigt im Gegensatz zu Figur 3a eine abweichende, rechtwinklig verspringende Schnittlinie B - B.

Die zugehörige Schnittansicht zeigt Figur 4b. Sie bietet einen Blick auf das seitlich geschnittene Brühkammeroberteil 10, dessen Gehäuse 110 asymmetrisch angeschnitten, dessen Brühtopf 120 jedoch nicht geschnitten ist. An ihm ist beidseits eine gegenüber der senkrechten Verschieberichtung D waagrecht liegende Platte 129 außenseitig angebracht, auf der eine Rolle 163 eines Exzenters 161 abrollen kann. Die Platte 129 und die Rolle 163 bestehen aus Metall, um bei geringer Rollreibung hohe Druckkräfte übertragen zu können. Der Exzenter 161 liegt innerhalb des Gehäuses 110 und ist starr mit der Steuerplatte 114 (Figur 2a) verbunden. Wird der Bedienhebel 16 in Figur 4b in Schließrichtung H abwärts geschwenkt, so drehen der Exzenter 161 und die Steuerplatte 114 (Figur 2a) in der Gegenrichtung, also gegen die Uhrzeigerrichtung. Der Exzenter 161 presst dabei die Rolle 163 auf die Platte 129, die den sie tragenden Brühtopf 120 abwärts bewegt. Damit ist der Brühtopf 120 auf dem Brühkammerunterteil 20 verriegelt

Die Figuren 1 bis 4 zeigen den Brühkopf 1 in seiner ersten Betriebsposition, nämlich in einer Öffnungsstellung. In den folgenden Darstellungen wird der Brühkopf 1 am Bedienhebel 16 von seiner Öffnungsstellung in eine teilgeschlossene und schließlich eine geschlossene Position bewegt. Dabei werden nacheinander eine Vorverriegelungseinrichtung und schließlich eine Hauptverriegelungseinrichtung aktiviert. Gemeinsam bilden sie die Verriegelungseinrichtung des Brühkopfs 1. Wesentliche Bestandteile der Vorverriegelungseinrichtung sind die Steuerplatte 114 und die Haken 140, die in die Hakennischen 230 (Figur 1a) eingreifen. Bestandteile der Hauptverriegelung sind der Exzenter 161 mit der Rolle 163, die auf die Platte 129 am Brühkammertopf 120 wirken.

Die Schnittansicht gemäß Figur 4b zeigt außerdem das Brühkammerunterteil 20 mit einer kleinen Substratkapsel 40. Die verspringende Schnittlinie B - B durch den Rahmen 210 und den Auswerfer 220 legt einen Strichcodeleser 240 frei, der auf das Laminat 31 auf der Unterseite der Substratkapsel 40 wirkt. Nach oben versetzt daneben liegt eine ringförmige Dichtung 250, die einen so genannten Piercer 260 als Druckeinlass (und einen weiteren, nicht dargestellten Piercer als Druckauslass) konzentrisch umgibt. Er stellt einen Hohlstift mit einer abgeschrägten Spitze dar und ist mit der Substratkapsel 40 konzentrisch angeordnet. Beim Schließen des Brühkopfs 1 durchsticht er das Laminat 31 der Substratkapsel 40 an einer dem Sackloch 33 gegenüberliegenden Stelle. Da der Brühkopf 1 in Figur 4b noch nicht geschlossen ist, steht die Dichtung 250 noch nicht in Kontakt mit dem Laminat 31 der Substratkapsel 30, ist also entspannt.

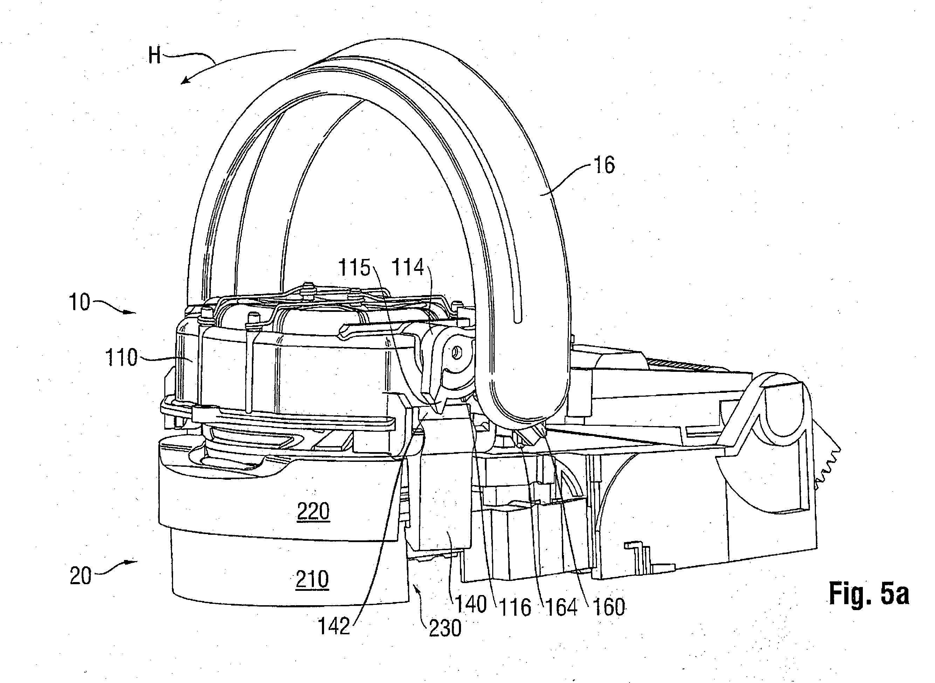

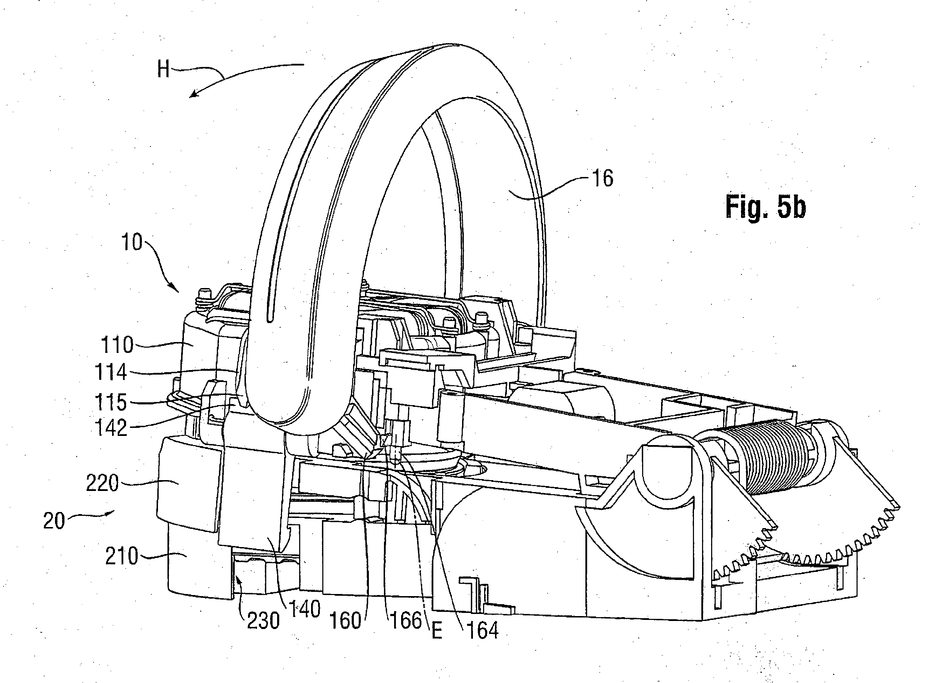

Die Figuren 5a, 5b zeigen perspektivische Ansichten des Brühkopfs 1 in einer Stellung, kurz bevor er die teilgeschlossene Position einnimmt. Das Brühkammeroberteil 10 ist auf das Brühkammerunterteil 20 abgesenkt. Der Federstift 164 berührt allerdings noch nicht das Brühkammerunterteil 20 bzw. den Auswerfer 220, ist also noch nicht entgegen der Federkraft in das Gehäuse 110 eingefahren. Der Dreiecksriegel 166 sperrt also weiterhin eine Verschwenkbewegung des Zapfens 160 am Bedienhebel 16. Ohne eine Verschwenkung des Bedienhebels 16 in Schließrichtung H kann auch die Steuerplatte 114 nicht verdreht werden. Daher liegt seine Nase 115 unverändert am Ansatz 142 des Hakens 140 an und verhindert, dass er seiner Federvorspannung folgend in die Hakennische 230 einhaken kann, wozu er in dieser Stellung des Brühkammeroberteils 10 auch noch nicht in der Lage ist.

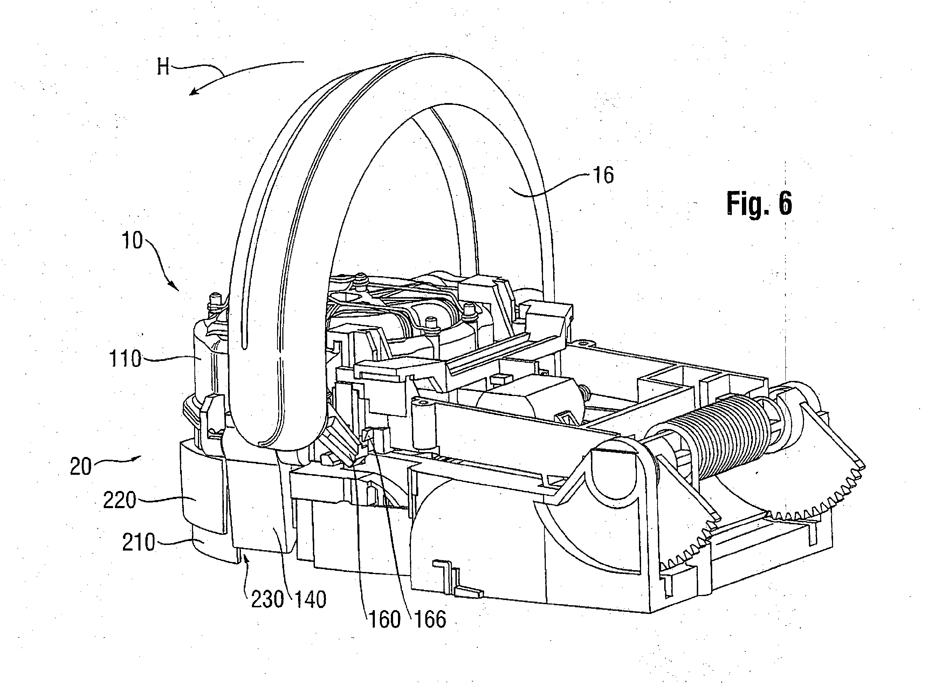

Figur 6 zeigt eine ähnliche perspektivische Ansicht wie Figur 5b, in der das Brühkammeroberteil 10 bereits auf dem Brühkammerunterteil 20 aufsetzt. Dadurch wird der in Figur 6a nicht mehr zu erkennende Federstift 164 (vgl. Figur 5b) in das Gehäuse 110 eingeschoben, wodurch der von ihm abstehende Dreiecksriegel 166 ebenfalls nach oben verschoben wird. Er gibt damit den Verschwenkweg des Zapfens 160 am Bedienhebel 16 frei, so dass jetzt der Bedienhebel 16 in der Verschwenkrichtung H abwärts geschwenkt werden kann.

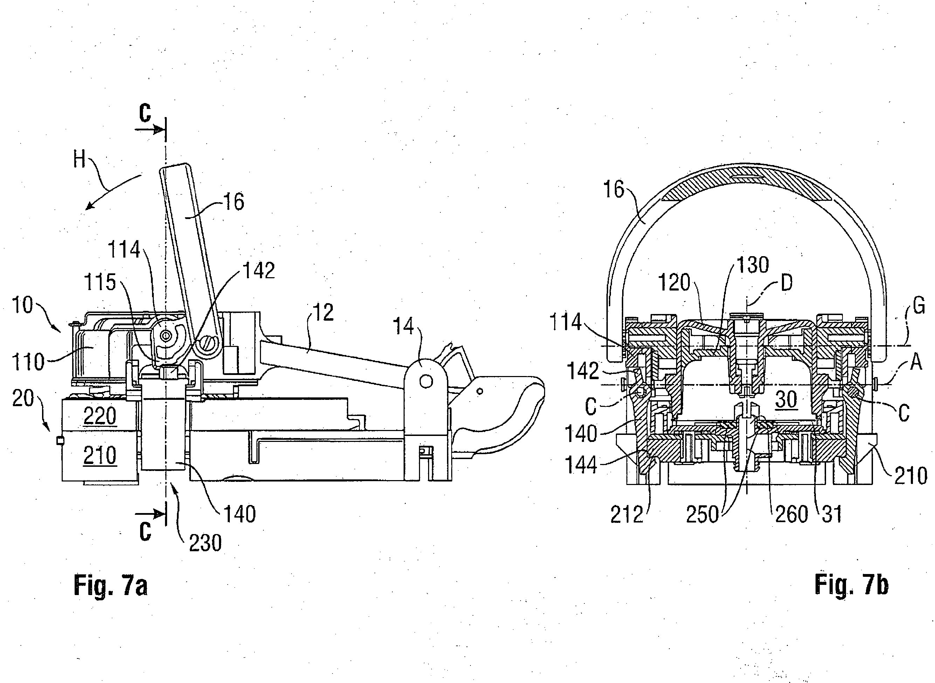

Diese Situation zeigen die Figuren 7a, b. Figur 7b ist eine Schnittansicht entlang der Schnittlinie C - C aus Figur 7a durch den Brühkopf 1 mit einer großen Substratkapsel 30. Der Bedienhebel 16 befindet sich in der Grundstellung (vgl. Figur 1a). Der Ansatz 142, der in dieser Ausführungsform aus Dimensionierungsgründen nur einen Teil der Breite des Hakens 140 einnimmt, ist frei von der Nase 115. Der Haken 140 kann sich daher seiner Federvorspannung folgend nach innen und damit in die Hakennische 230 hinein bewegen. Er hakt am Rahmen 210 ein, wo er mit seinen Hakenflächen 144 an Rahmenflächen 212 satt anliegt (Figur 7b). Die Berührebene, in der die Hakenflächen 144 und die Rahmenflächen 212 liegen, ist geneigt, so dass eine Lotrechte auf die Berührebene bzw. die Hakenflächen 144 und die Rahmenflächen 212 außerhalb der Schwenkachse C der Haken 140 verläuft. Die Verriegelung ist dadurch selbsthemmend ausgebildet, weil eine Druckkraft, die während des Betriebs senkrecht auf die Flächen 144, 212 wirkt, ein Moment erzeugt, das den Haken 140 nicht in seiner Öffnungsrichtung, sondern in seiner Schließrichtung belastet. Die Druckkraft wirkt also als Unterstützung der Verriegelung und nicht dagegen.

Mit dem Einrasten der Haken 140 in die Hakennischen 230 ist die Vorverriegelung des Brühkopfs 1 aktiviert. Eine Bewegung des Bedienhebels 16 in Schließrichtung H und damit entgegen dem Uhrzeigersinn verdreht die Steuerplatte 114 in Uhrzeigerrichtung. Sie sorgt für eine mechanische Blockade gegen ein ungewolltes Entriegeln der Haken 140. Denn jetzt greifen die zweiten Nasen 116 an jeder Steuerplatte 114 hinter den Ansatz 142 des Hakens 140, also zwischen den Ansatz 142 und das Gehäuse 110 (vgl. Figur 2a), bald nachdem die erste Nase 115 den Kontakt mit dem Ansatz 142 verliert. Die zweite Nase 116 blockiert folglich die Verschwenkung des Hakens 140 in seiner Öffnungsrichtung. Sind die Haken 140 dagegen nicht vollständig in die Hakennischen 230 eingehakt, zum Beispiel nicht weit genug in die Hakennischen 230 hineingeschwenkt, blockiert der Bedienhebel 16, weil die zweiten Nasen 116 gegen den Ansatz 142 stoßen. Da dann die Haken 140 als wesentlicher Bestandteil der Vorverriegelungseinrichtung nicht in ihrer bestimmungsgemäßen Vorverriegelungsposition stehen, kann keine weitere Bedienung des Geräts mehr erfolgen. Vielmehr weist die Blockade des Bedienhebels 16 den Benutzer darauf hin, dass eine Störung vorliegt.

In der in den Figuren 7a, b dargestellten Vorverriegelungsposition sind zwar das Brühkammeroberteil 10 und das Brühkammerunterteil 20 miteinander verriegelt, der Brühkopf 1 ist also teilgeschlossen. Die Brühkammer jedoch, in der sich die Substratkapsel 30 befindet, ist noch nicht vollständig verschlossen, die Dichtung 250 ist noch entspannt. Mit fortschreitender Bewegung des Hebels 16 in seine Schließrichtung H dreht der Exzenter 161 (Figur 4b) weiter gegen die Uhrzeigerrichtung und presst die Rolle 163 auf die Platte 129. Dadurch wird der Brühtopf 120 innerhalb des Gehäuses 110 entlang der Verschieberichtung D abwärts gedrückt. Er nimmt den Brühkammerschlitten 130 mit und presst die große Substratkapsel 30 mit ihrem Laminat 31 auf den Auswerfer 220 bzw. Rahmen 210. Dabei durchsticht der Piercer 260 das Laminat 31 der Substratkapsel 30. Um beim späteren Einleiten von heißem Wasser in die Kapsel 30 einen ungewollten Austritt von Flüssigkeit am Piercer 260 zu verhindern, verschließt die Dichtung 250 bei geschlossenem Brühkopf 1 einen möglichen Spalt zwischen der Substratkapsel 30 und dem Piercer 260 bzw. dem Rahmen 210 (sinngemäß auch an dem nicht dargestellten zweiten Piercer). Dabei wird sie von ihrer Unterseite aus zusammengedrückt bzw. drückt sich ihrerseits mit ihrem Laminat 31 aus in die Substratkapsel 30 hinein. Dadurch wird die Dichtung 250 aktiviert und die Substratkapsel 30 gegenüber dem Auswerfer 220 dicht verschlossen, so dass sie zusammen eine vollständig geschlossene und dichte Brühkammer bilden.

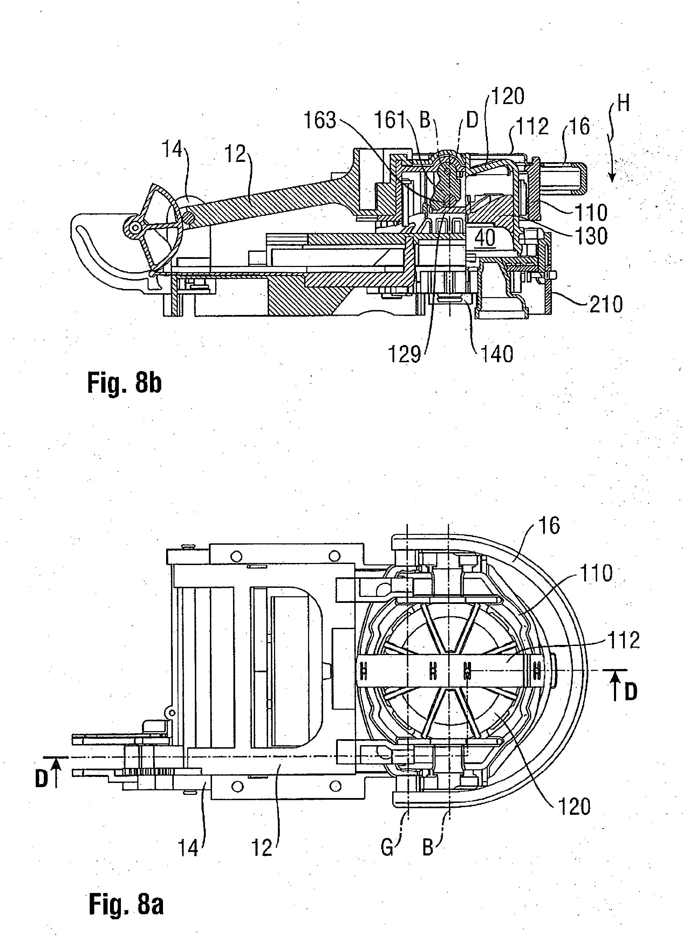

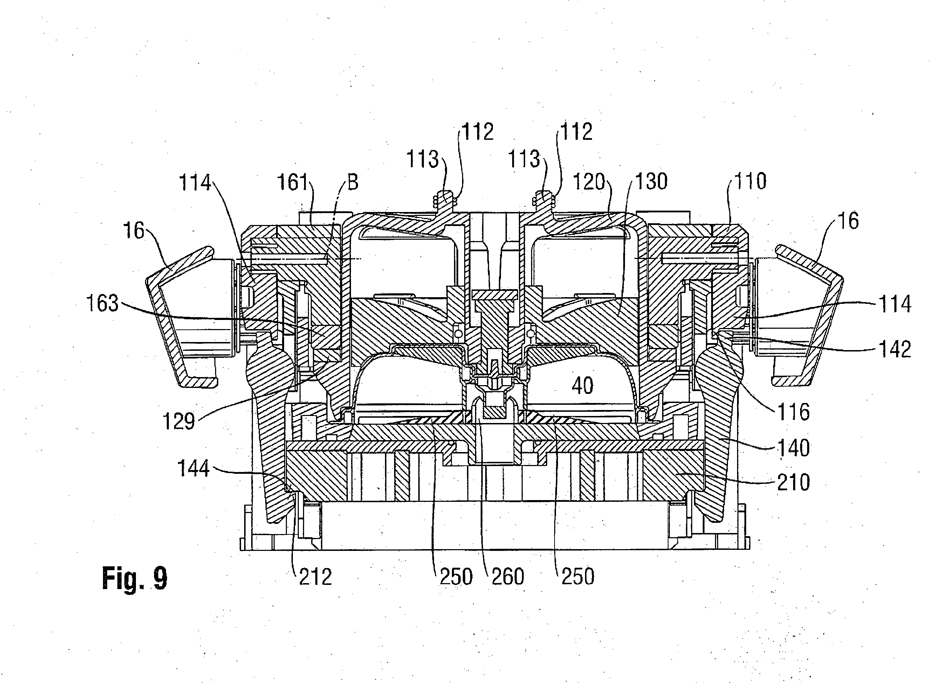

Diese Situation zeigt Figur 8b, die einen Schnitt entlang der verspringenden Schnittlinie D - D gemäß Figur 8a darstellt, für die erste Ausführungsform der Erfindung und Figur 9 für die zweite.. Der Bedienhebel 16 hat eine vollständig waagerechte Position und damit seine Verschlussstellung eingenommen. Er hat dadurch den Exzenter 161 (Figur 8b) in eine quasi senkrechte Position überführt, in der er die Rolle 163 in deren am tiefsten abgesenkte Position gebracht hat. Damit drückt sie über die Platte 129 den Brühtopf 120 maximal abwärts auf den Auswerfer 220. Der Exzenter 161 verbringt dabei die Rolle 163 über einen Todpunkt senkrecht unterhalb seiner Drehachse B hinaus bis auf die Höhe der Verschiebeachse D. Eine Druckkraft, die während des Brühprozesses auf den Brühtopf 120 in vertikaler Richtung nach oben und damit in Öffnungsrichtung wirkt, überträgt sich über die Platte 129 auf die Rolle 163. Aufgrund ihrer Lage jenseits des Todpunkts des Exzenters 161 übt sie ein Moment in Schließrichtung, in Figur 8b gegen den Uhrzeigersinn auf den Exzenter 161 aus, und nicht in der entgegengesetzten Öffnungsrichtung. Dadurch ist dafür gesorgt, dass die Verriegelung des Brühtopfs 120 unter einer Druckbelastung, die während des Zubereitungsvorgangs auftritt, nicht gelöst werden kann.

Figur 9 zeigt einen geschlossenen Brühkopf 1 der zweiten Ausführungsform und in einer der Figur 7b vergleichbaren Schnittansicht, lediglich mit einer kleinen Substratkapsel 40. Die dortigen Erläuterungen und diejenigen zur Figur 8b lassen sich daher an Figur 9 weitgehend nachvollziehen.

Der Brühkammerschlitten 130 ist in Figur 9 wegen der kleinen Substratkapsel 40 in seine untere Position abgesenkt und drückt sie auf den Piercer 260, das Laminat 31 der Kapsel 40 damit auf die Dichtung 250. Sie ist abweichend von Figur 7b tellerförmig ausgebildet und erstreckt sich über einen Großteil der Unterseite der Kapsel 40.

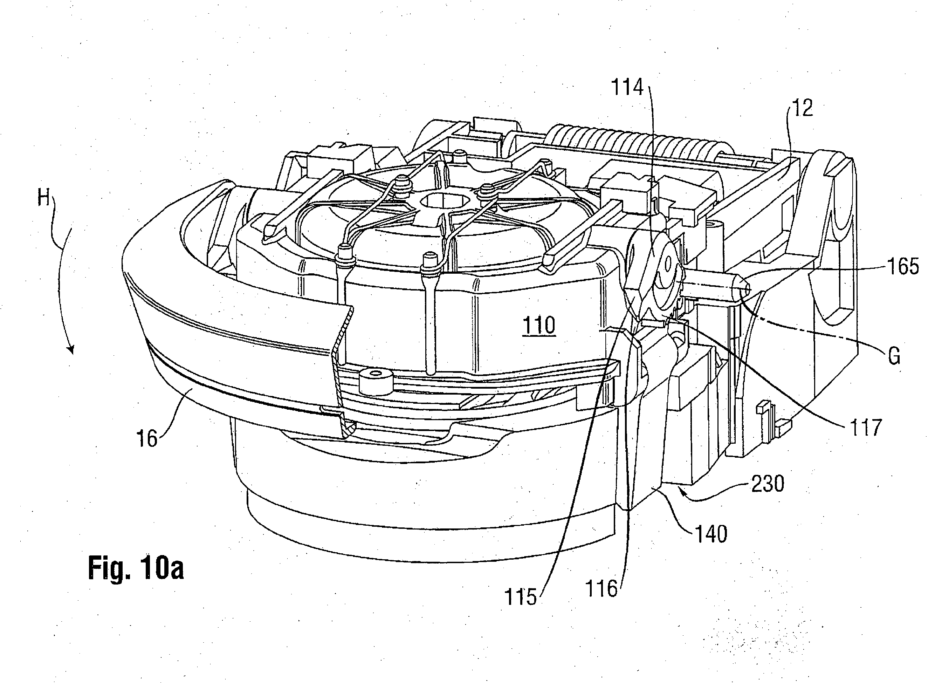

Die Figuren 10a bis c zeigen in perspektivischer Ansicht die Schließposition des Brühkopfs 1 und einen letzten Sicherungsvorgang. In Figur 10a ist zur Verdeutlichung die rechte Hälfte des Bedienhebels 16 weggelassen, so dass seine Welle 165 freiliegt, über die er um seine Drehachse G verschwenkt. Zu erkennen ist eine Verzahnung 117 an der Steuerplatte 114, mit der die Schwenkbewegung des Bedienhebels 116 auf die Steuerplatte 114 übertragen wird. Zu erkennen ist außerdem die zweite Nase 116 an der Steuerplatte 114, die zwischen dem Gehäuse 110 und dem Ansatz 142 des Hebels 140 dessen Schwenkbewegung aus den Hakennischen 230 heraus blockiert.

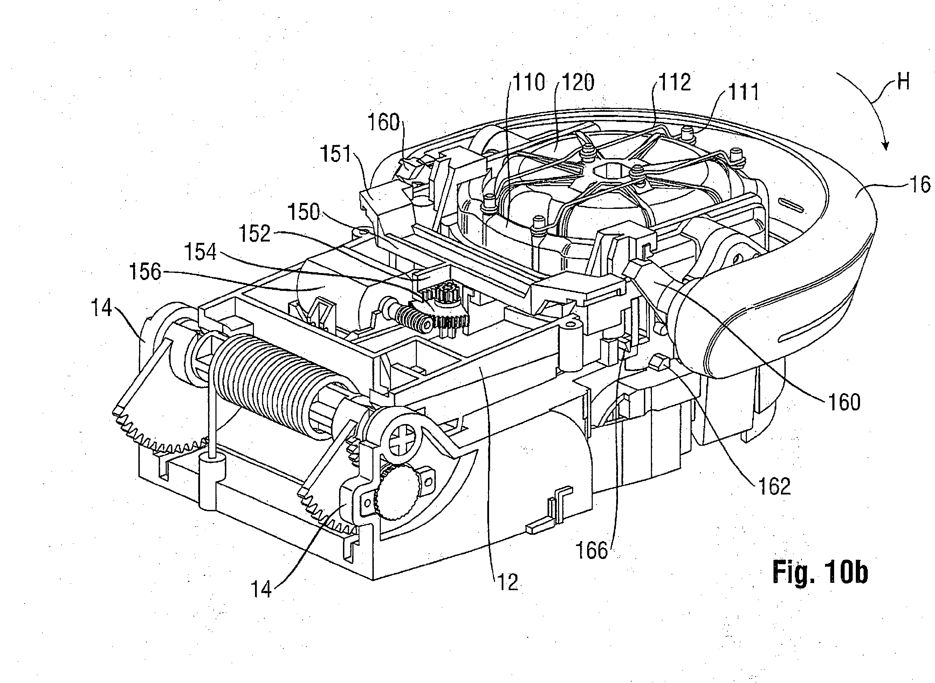

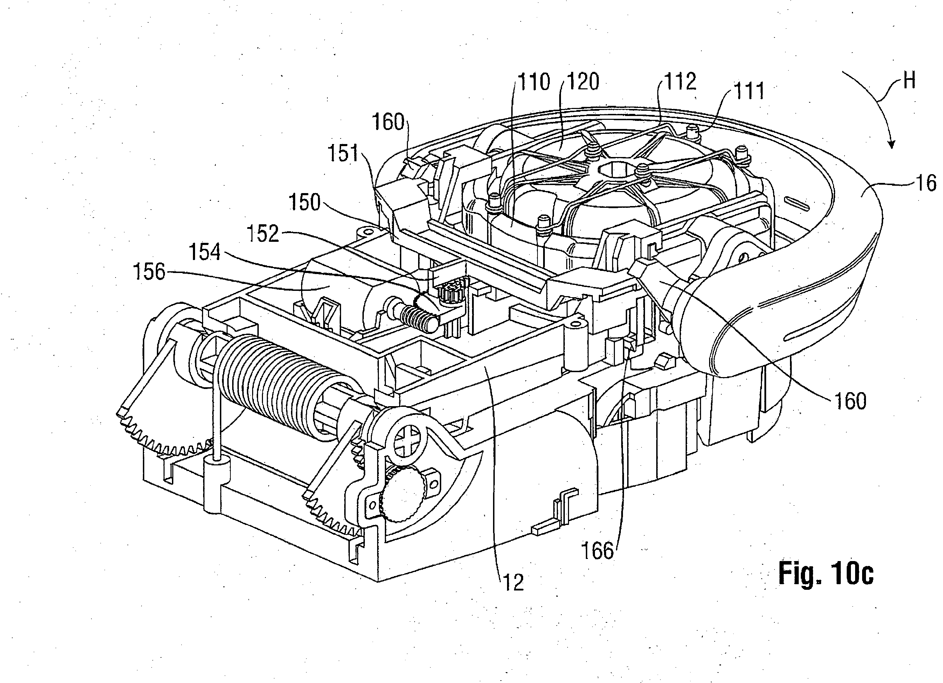

Figur 10b zeigt eine in etwa entgegengesetzte perspektivische Ansicht, in der die bereits in Figur 2b genannten aber nicht erläuterten Bauteile 150, 156 im Brühkopfarm erkennbar sind:
Der entlang des Brühkopfarms verschiebbare Arretierschlitten 150 spannt sich quer über den gesamten Brühkopfarm 12 und läuft in zwei gekröpften Flügeln 151 aus. Auf seiner dem Gehäuse 110 abgewandten Seite steht eine Zahnstange 152 in der Erstreckungsrichtung des Brühkopfarms 12 vom Arretierschlitten 150 ab. Sie greift in ein Getriebe 154 ein, das mit einem Elektromotor 156 gekoppelt ist. Sobald der Brühkopf 1 vollständig verschlossen ist, wird ein nicht dargestellter Mikroschalter betätigt, der den Elektromotor 156 aktiviert. Über das Getriebe 154 verfährt er den Arretierschlitten 150 auf das Gehäuse 110 zu. Dabei fahren seine Flügel 151 unter die Zapfen 160 des Bedienhebels 16. Diesen Zustand zeigt Figur 10c. Der Bedienhebel 116 ist damit blockiert, weil die Zapfen 160 nicht mehr entgegen der Schließrichtung H, also in Öffnungsrichtung, verschwenkt werden können. Ein versehentliches oder gewaltsames Öffnen des Bedienhebels 16 ist also so gut wie ausgeschlossen, sobald der Mikroschalter geschlossen und der Brühvorgang in Gang gesetzt worden ist.

Sobald der Brühprozess abgeschlossen ist, erhält der Motor 156 das Signal, den Arretierschlitten 150 zurückzufahren, so dass die Zapfen 160 und mit ihnen der Bedienhebel 16 entgegen der Schließrichtung H verschwenkt werden können. Dadurch wird der Öffnungsvorgang des Brühkopfs 1 eingeleitet, der prinzipiell in der umgekehrten Reihenfolge wie der Schließvorgang erfolgt. Demnach verdreht der Bedienhebel 16 über die Steuerplatte 114 zunächst den Exzenter 161 in der Öffnungsrichtung, also im Uhrzeigersinn (Figur 8b). Damit entspannt er den Brühtopf 120 und dessen Dichtung gegenüber dem Auswerfer 220. Dabei ziehen die Federspangen 112, an denen der Brühtopf 120 über die Stifte 113 hängt, den Brühtopf 120 vom Auswerfer 220 ab und in einer Verschiebungsrichtung D nach oben. Mit dem Entspannen der Dichtung kann noch verbleibender Restdruck aus dem Brühtopf 120 entweichen.

Dieser Vorgang setzt ein, sobald der Bedienhebel 16 gerade seine waagerechte Position verlassen hat. Zu diesem Zeitpunkt ist die Vorverriegelungseinrichtung immer noch aktiviert, so dass der sich nun langsam entspannende Druck das Brühkammeroberteil 10 nicht schlagartig aufsprengen kann. Über den relativ langen Verschwenkweg in Öffnungsrichtung, also entgegen der Schließrichtung H, erfolgt eine kontinuierliche Entspannung der Dichtung 250 und ein sukzessiver Druckabbau. Er ist längst abgeschlossen, wenn der Bedienhebel 16 sich der senkrechten Position nähert. Dann gibt die zweite Nase 116 (Figur 10a) die Haken 140 frei, so dass sie grundsätzlich verschwenkt werden können. Ihre Federvorspannung hält sie jedoch weiterhin in der verriegelten Position. Mit dem weiteren Aufrichten des Bedienhebels 16, jenseits der 80°-Position (vgl. Figur 1) gegen seine Federvorspannung, greift die erste Nase 115 sukzessive am Ansatz 142 an und drückt ihn fortschreitend in eine Richtung gegen das Gehäuse 110. Dadurch schwenkt sie den Haken 140 aus der Hakennische 230 aus, womit die Vorverriegelung gelöst ist (Figur 5a). Mit dem Lösen der Vorverriegelung sind das obere Brühkammerteil 10 und das untere Brühkammerteil 20 endgültig voneinander gelöst, so dass das obere Brühkammerteil 10 aufschwenken kann, um für einen nachfolgenden Brühprozess zur Verfügung zu stehen.

### Bezugszeichenliste

- 1: Brühkopf
- 10: verschwenkbares Brühkammeroberteil
- 12: Brühkopfarm
- 14: Lagerblock
- 16: Betätigungshebel
- 20: feststehendes Brühkammerunterteil
- 30: große Substratkapsel
- 31: Laminat
- 32: Oberseite
- 33: Sackloch
- 34: Einkerbung
- 40: kleine Substratkapsel
- 110: Gehäuse
- 111: Stifte am Gehäuse 110
- 112: Federspange
- 113: Stifte am Brühtopf 120
- 114: Steuerplatte
- 115: erste Nase
- 116: zweite Nase
- 117: Verzahnung
- 119: Dichtung
- 120: Brühtopf
- 121: Durchbruch
- 122: Arretierschlitten
- 123: Arretiernase
- 124: Steuerring
- 125: Schräge
- 126: Anlauffläche
- 127: Mantel
- 128: Innenfläche
- 129: Platte
- 130: Brühkammerschlitten
- 131: Sperrfläche
- 132: Zentrierstift
- 133: Stirnfläche
- 134: Positionierstift
- 135: Oberseite
- 140: Haken
- 142: Ansatz
- 144: Hakenflächen
- 150: Arretierschlitten
- 151: Flügel
- 152: Zahnstange
- 154: Getriebe
- 156: Elektromotor
- 160: Zapfen an 16
- 161: Exzenter
- 162: Anschlag zu 160
- 163: Rolle
- 164: Federstift
- 165: Welle zu 16
- 166: Dreiecksriegel
- 210: Rahmen
- 212: Rahmenflächen
- 220: Auswerfer
- 230: Hakennische
- 240: Stichcodeleser
- 250: Dichtung
- 260: Piercer

- A: Schwenkachse des Brühkammeroberteils 10
- B: Schwenkachse der Steuerplatte 114
- C: Schwenkachse der Haken 140
- D: Verschieberichtung des Brühkammerschlittens 130
- E: Verschieberichtung des Federstifts 164
- G: Schwenkachse des Betätigungshebels 16
- H: Schließrichtung des Betätigungshebels 16

## Patentansprüche

1. Brühkopf (1) einer Heißgetränkemaschine mit einer Brühkammer zur Aufnahme einer Substratkapsel (30; 40) aus einem feststehenden Brühkammerteil (20) und einem bewegbaren Brühkammerteil (10), um die Brühkammer zu öffnen, mit einer Verriegelung (140, 230, 161, 163) zum Verschließen der beiden Brühkammerteile (10; 20) zu der Brühkammer und mit einer Dichtung (250) zur druckdichten Abdichtung einer der beiden Brühkammerteile (10; 20) und der Substratkapsel (30; 40) während der Getränkezubereitung, und mit drei Betriebspositionen der Brühkammer, nämlich einer Öffnungsposition zum Beladen der Brühkammer, einer teilgeschlossenen Position, in der die Brühkammer geschlossen und die Dichtung (250) entspannt ist, und einer geschlossenen Position, in der die Brühkammer ebenfalls geschlossen und die Dichtung (250) gespannt ist, und mit einem zylindrischen Brühkammertöpf (120) in einem der beiden Brühkammerteile (10), der zwischen einer Öffnungsstellung mit einer entspannten Dichtung (250) und einer Schließstellung mit einer gespannten Dichtung (250) entlang einer Verschiebeachse (D) verfahrbar ist, **gekennzeichnet durch** eine Vorverriegelungseinrichtung (140, 230) als Bestandteil der Verriegelung, die die beiden Brühkammerteile (10; 20) in der teilgeschlossenen Position miteinander verriegelt.

2. Brühkopf nach Anspruch 1, **gekennzeichnet durch** einen Haken (140) der Vorverriegelungseinrichtung (140, 230), der an einem der beiden Brühkammerteile (10) angebracht und am anderen Brühkammerteil (20) einhakbar ist.

3. Brühkopf nach Anspruch 2, **dadurch gekennzeichnet, dass** der Haken (140) der Vorverriegelungsrichtung (140, 230) vorgespannt ist.

4. Brühkopf nach einem der Ansprüche 1 bis 3, **gekennzeichnet durch** eine Sperre (116), die das Verbringen der Brühkammer in die geschlossene Position blockiert, solange die Vorverriegelungseinrichtung (140, 230) entriegelt ist.

5. Brühkopf nach Anspruch 4, **gekennzeichnet durch** zwei Schließ-, Arretierstellungen des Brühkammerschlittens (130) innerhalb des Brühkammerteils (10).

6. Brühkopf nach einem der Ansprüche 1 bis 5 mit einem Betätigungshebel (16) zum Öffnen und Schließen der Brühkammer, **dadurch gekennzeichnet, dass** durch ihn zusätzlich die Vorverriegelungseinrichtung (140, 230) betätigbar ist.

7. Brühkopf nach Anspruch 6, **dadurch gekennzeichnet, dass** durch den Betätigungshebel (16) zusätzlich der Brühkammertopf (120) verfahrbar ist.

8. Brühkopf nach Anspruch 7, **dadurch gekennzeichnet, dass** durch den Betätigungshebel (16) zusätzlich der Brühkammerschlitten (130) arretierbar ist.

9. Brühkopf nach Anspruch 7. oder 8, **gekennzeichnet durch** eine mechanische Kopplung zwischen dem Betätigungshebel (16), der Vorverriegelungseinrichtung (140, 230) und dem Brühkammertopf (120), **durch** die der Brühkammertopf (120) erst nach der Betätigung der Vorverriegelungseinrichtung (140, 230) verfahrbar und/oder arretierbar ist.

10. Brühkopf nach Anspruch 9, **gekennzeichnet durch** ein Blockadeelement (160, 164, 166), das das Verschwenken des Betätigungshebels (16) solange blockiert, bis das verschwenkbare Brühkammerteil (10) auf dem feststehenden Brühkammerteil (20) aufliegt.

11. Heißgetränkemaschine mit einem Brühkopf (1) nach einem der obigen Ansprüche.

## Claims

1. Brewing head (1) of a hot beverage machine having a brewing chamber to receive a substrate capsule (30; 40) consisting of a fixed brewing chamber part (20) and a movable brewing chamber part (10), with which the brewing chamber can be opened, having a locking system (140, 230, 161, 163) for closing the two brewing chamber parts (10; 20) to form the brewing chamber and having a seal (250) for the pressure-tight sealing of one of the two brewing chamber parts (10; 20) and the substrate capsule (30; 40) during beverage preparation, and having three operating positions of the brewing chamber, namely an opening position for loading the brewing chamber, a partially closed position in which the brewing chamber is closed and the seal (250) is detensioned and a closed position in which the brewing chamber is likewise closed and the seal (250) is tensioned, and having a cylindrical brewing chamber pot (120) in one of the two brewing chamber parts (10), which can be moved along an axis (D) between an opening position with a detensioned seal (250) and a closed position with a tensioned seal (250), **characterised by** a pre-locking facility (140, 230) as part of the locking system, which locks the two brewing chamber parts (10; 20) together in the partially closed position.

2. Brewing head according to claim 1, **characterised by** a hook (140) of the pre-locking facility (140, 230), which is positioned on one of the two brewing chamber parts (10) and can be hooked to the other brewing chamber part (20).

3. Brewing head according to claim 2, **characterised in that** the hook (140) of the pre-locking facility (140, 230) is pretensioned.

4. Brewing head according to one of claims 1 to 3, **characterised by** a stop (116), which blocks the movement of the brewing chamber into the closed position if the pre-locking facility (140, 230) is unlocked.

5. Brewing head according to claim 4, **characterised by** two closing, stop positions of the brewing chamber carriage (130) within the brewing chamber part (10).

6. Brewing head according to one of claims 1 to 5, having an actuation lever (16) for opening and closing the brewing chamber, **characterised in that** the pre-locking facility (140, 230) can also be actuated by it.

7. Brewing head according to claim 6, **characterised in that** the brewing chamber pot (120) can also be moved by the actuation lever (16).

8. Brewing head according to claim 7, **characterised in that** the brewing chamber carriage (130) can also be stopped by the actuation lever (16).

9. Brewing head according to claim 7 or 8, **characterised by** a mechanical coupling between the actuation lever (16), the pre-locking facility (140, 230) and the brewing chamber pot (120), by means of which the brewing chamber pot (120) can only be moved and/or stopped after actuation of the pre-locking facility (140, 230).

10. Brewing head according to claim 9, **characterised by** a blocking element (160, 164, 166) which blocks the pivoting of the actuation lever (16) until the pivotable brewing chamber part (10) rests on the fixed brewing chamber part (20).

11. Hot beverage machine having a brewing head (1) according to one of the preceding claims.

## Revendications

1. Tête d'ébouillantage (1) d'une machine pour préparer des boissons chaudes avec une chambre d'ébouillantage servant à accueillir une capsule à substrat (30 ; 40) composée d'une partie de chambre d'ébouillantage fixe (20) et d'une partie de chambre d'ébouillantage mobile (10), afin d'ouvrir la chambre d'ébouillantage, avec un verrouillage (140, 230, 161, 163) afin de verrouiller les deux parties de chambre d'ébouillantage (10 ; 20) pour former la chambre d'ébouillantage et avec un joint (250) afin d'étancher à la pression l'une des deux parties de chambre d'ébouillantage (10; 20) et la capsule à substrat (30 ; 40) durant la préparation de la boisson, et avec trois positions d'exploitation de la chambre d'ébouillantage, à savoir une position ouverte pour le chargement de la chambre d'ébouillantage, une position partiellement fermée dans laquelle la chambre d'ébouillantage est fermée et le joint (250) est détendu et une position fermée dans laquelle la chambre d'ébouillantage est également fermée et le joint (250) est tendu, et avec un pot de tête d'ébouillantage cylindrique (120) dans l'une des deux parties de chambre d'ébouillantage (10), mobile le long d'un axe de déplacement (D) entre une position ouverte avec un joint (250) détendu et une positions fermée avec un joint (250) tendu, **caractérisée par** un dispositif de pré-verrouillage (140, 230) comme composant de verrouillage, lequel verrouille les parties de chambre d'ébouillantage (10 ; 20) l'une à l'autre dans la position partiellement fermée.

2. Tête d'ébouillantage selon la revendication 1, **caractérisée par** un crochet (140) du dispositif de pré-verrouillage (140, 230) disposé sur l'une des deux parties de chambre d'ébouillantage (10) et qui s'accroche à l'autre partie de chambre d'ébouillantage (20).

3. Tête d'ébouillantage selon la revendication 2, **caractérisée en ce que** le crochet (140) du dispositif de pré-verrouillage (140, 230) est prétendu.

4. Tête d'ébouillantage selon l'une des revendications 1 à 3, **caractérisée par** un blocage (116) qui empêche de placer la chambre d'ébouillantage en position fermée tant que le dispositif de pré-verrouillage (140, 230) est déverrouillé.

5. Tête d'ébouillantage selon la revendication 4, **caractérisée par** deux positions de verrouillage, d'arrêt du chariot de chambre d'ébouillantage (130) au sein de la partie de chambre d'ébouillantage (10).

6. Tête d'ébouillantage selon l'une des revendications 1 à 5 avec un levier d'actionnement (16) servant à ouvrir et à fermer la chambre d'ébouillantage, **caractérisée en ce qu'**il permet en outre d'actionner le dispositif de pré-verrouillage (140, 230).

7. Tête d'ébouillantage selon la revendication 6, **caractérisée en ce que** le levier d'actionnement (16) permet en outre de déplacer le pot de tête d'ébouillantage (120).

8. Tête d'ébouillantage selon la revendication 7, **caractérisée en ce que** le levier d'actionnement (16) permet en outre le chariot de chambre d'ébouillantage (130).

9. Tête d'ébouillantage selon la revendication 7 ou 8, **caractérisée par** un couplage mécanique entre le levier d'actionnement (16), le dispositif de pré-verrouillage (140, 230) et le pot de tête d'ébouillantage (120), via lequel le pot de tête d'ébouillantage (120) peut uniquement être déplacé et/ou arrêté après l'actionnement du dispositif de pré-verrouillage (140, 230).

10. Tête d'ébouillantage selon la revendication 9, **caractérisée par** un élément de blocage (160, 164, 166) qui bloque le basculement du levier d'actionnement (16) tant que la partie de chambre d'ébouillantage basculable (10) repose sur la partie de chambre d'ébouillantage (20) fixe.

11. Machine pour préparer des boissons chaudes avec une tête d'ébouillantage (1) selon l'une des revendications précédentes.
